# EUROPEAN PATENT APPLICATION

(11) **EP 0 792 741 A1**
(43) Date of publication of application: **03.09.1997**
(21) Application number: 96305552.0
(22) Date of filing: 29.07.1996
(51) Int. Cl.: B32B 27/32, A63H 27/10

(54) **Inflatable bag body and method for producing same**

(30) Priority: 27.02.1996 JP 80438/96
(71) Applicant: NIHON MATAI COMPANY LIMITED, Taito-ku Tokyo (JP)
(72) Inventor: Noguchi, Tatsuo, c/o Branch of Nihon Matai Co, Ltd, Nishi-ku, Osaka-shi, Osaka (JP)
(74) Representative: Pacitti, Pierpaolo A.M.E.

(57) **Abstract**

An inflatable bag body comprises a multilayered film (10). The multilayered film (10) includes: a base film layer (11) having first and second surfaces; a coating layer (12) formed out of an anchor coating material on the first surface of the base film layer (11); a first polyolefin resin layer (13) formed out of a polyolefin resin material on the coating layer (12); a deposited metal layer (14) deposited a metal on the second surface of the base film layer (11); and a second polyolefin resin layer (17) formed out of a polyolefin resin material on the deposited metal layer (14). The multilayered film (10) is externally exposed with the second polyolefin resin layer (17) to cover the base film layer (11) and the deposited metal layer (14). The multilayered film (10) has peripheral portions connected with each other by heating and pressing the first polyolefin resin layer (13) along the peripheral portions. The deposited metal layer (14) cannot elastically expanded while the base film layer (11) and therefore apt to be damaged to have fine cracks. The damaged deposited metal layer (14) can be protected by the second polyolefin resin layer (17) from drops of water and aqueous vapor to prevent the damaged deposited metal layer (14) from being oxidized and from partly peeling from the base film layer (11) while being exposed to the weather. And The second polyolefin resin layer (17) has non-electrical conductivity thereby making the inflatable bag body restrain electrical conductivity.

## Description

### BACKGROUND OF THE INVENTION

### FIELD OF THE INVENTION

The present invention relates to an inflatable bag body and a method for producing the inflatable bag body out of a multilayered film.

### DESCRIPTION OF THE PRIOR ART

Conventionally, this kind of inflatable bag bodies have been utilized for balloons, advertising balloons, balls, toys, and so on. A typical inflatable bag body has been printed images on its surface, and has been formed in the shape of an animal, a plant or a famous character, or the like.

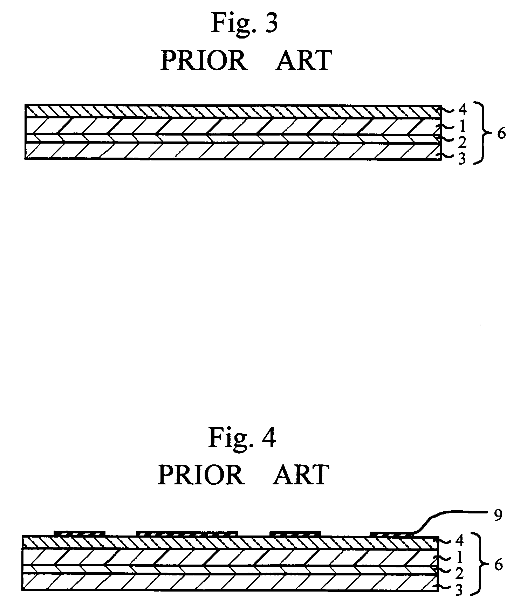

A conventional inflatable bag body comprises a multilayered film 6 shown in Fig. 3. The multilayered film 6 includes a base film layer 1, an anchor coating layer 2 formed out of an anchor coat material on one surface of the base film layer 1, a polyolefin resin layer 3 formed out of a polyolefin resin material on the anchor coating layer 2, a deposited metal layer 4 depositing metal on the other surface of the base film layer 1. The multilayered film 6 is externally exposed with the deposited metal layer 4. The multilayered film 6 has peripheral portions connected with each other by heating and pressing the polyolefin resin layer 3 along the peripheral portions to form the inflatable bag body.

Fig. 4 shows another printed multilayered film 6 forming part of another prior-art inflatable bag body. The printed multilayered film 6 comprises a base film layer 1, an anchor coating layer 2, a polyolefin resin layer 3 and a deposited metal layer 4 each of which is the same as that shown in Fig. 3, and printed with images 9 on the deposited metal layer 4. The images 9 can be easily printed by depositing an ink on the deposited metal layer 4 of the multilayered film 6.

The multilayered film 6 of the inflatable bag body constructed as above, however, has a drawback in that the deposited metal layer 4 on the base film layer 1 cannot be elastically expanded while the base film layer 1 elastically expands as the inflatable bag body is filled and inflated with a gas. The deposited metal layer 4 is therefore apt to be damaged to have fine cracks even if the inflatable bag body is utilized for a balloon and exposed to the weather. This results in the fact that the fine cracks of the damaged deposited metal layer 4 are oxidized and that the deposited metal layer 4 is partly peeled from the base film layer 1 while being exposed to the weather.

The inflatable bag body encounters still another drawback in that the deposited metal layer 4 can cause an undesirable accident in a power supply system by short-circuiting live electric wires when the inflatable bag body is brought into contact with the electric wires and results in excessive current flow.

The present invention contemplates provision of an improved inflatable bag body overcoming the above drawbacks of the prior-art inflatable bag body, and realization of a novel method for producing the improved inflatable bag body.

### SUMMARY OF THE INVENTION

It is an object of the present invention to provide method for producing an inflatable bag body out of a multilayered film and the inflatable bag body in which the multilayered film comprising a base film layer, a deposited metal layer, first and second polyolefin resin layers. The deposited metal layer is protected by the second polyolefin resin layer to prevent the deposited metal layer from partly peeling from the base film layer and to restrain electrical conductivity of the inflatable bag body.

In accordance with one aspect of the present invention, there is provided an inflatable bag body comprising a multilayered film. The multilayered film includes a base film layer, a deposited metal layer deposited on one surface of the base film layer, and a polyolefin resin layer formed out of a polyolefin resin material on the deposited metal layer. The polyolefin resin layer is externally exposed to cover the base film layer and the deposited metal layer.

In accordance with another aspect of the present invention, there is provided an inflatable bag body comprising a multilayered film. The multilayered film includes a base film layer having first and second surfaces, a coating layer formed out of an anchor coat material on the first surface of the base film layer, a first polyolefin resin layer formed out of a polyolefin resin material on the coating layer, a deposited metal layer deposited on the second surface of the base film layer, and a second polyolefin resin layer formed out of a polyolefin resin material on the deposited metal layer. The second polyolefin resin layer is externally exposed to cover the base film layer and the deposited metal layer. The multilayered film has peripheral portions connected with each other by heating and pressing the first polyolefin resin layer along the peripheral portions.

In accordance with a further aspect of the present invention, there is provided a method for producing an inflatable bag body, comprising the steps of: preparing a film to form a base film layer; depositing a metal on one surface of the base film layer to form a deposited metal layer; coating the deposited metal layer with a polyolefin resin material to form a polyolefin resin layer. The base film layer, the deposited metal layer and the polyolefin resin layer collectively form a multilayered film. The method for producing the inflatable bag body further comprises the steps of forming the multilayered film into a bag with the polyolefin resin layer externally exposed to cover the base film layer and the deposited metal layer.

In accordance with a still further aspect of the present invention, there is provided a method for producing an inflatable bag body, comprising the steps of: preparing a film to form a base film layer having first and second surfaces; coating the first surface of the base film layer with an anchor coat material to form a coating layer; coating the coating layer with a polyolefin resin material to form a first polyolefin resin layer; depositing a metal on the second surface of the base film layer to form a deposited metal layer; coating the deposited metal layer with a polyolefin resin material to form a second polyolefin resin layer. The base film layer, the coating layer, the first polyolefin resin layer, the deposited metal layer and the second polyolefin resin layer collectively form a multilayered film. The method for producing the inflatable bag body further comprises the steps of: holding one pair of parts of the first polyolefin resin layer in face-to-face relationship with each other with the second polyolefin resin layer being externally exposed to cover the base film layer and the deposited metal layer; and heating and pressing the parts of the first polyolefin resin layer.

### BRIEF DESCRIPTION OF THE DRAWINGS

A more complete appreciation of the present invention and attendant advantages thereof will be readily obtained as the same become better understood from the following detailed description when considered in connection with the accompanying drawings, wherein:
FIG. 1 is a cross sectional view of a first embodiment of a multilayered film forming part of an inflatable bag body according to the present invention;
FIG. 2 is a cross sectional view of a second embodiment of a multilayered film forming part of an inflatable bag body according to the present invention;
FIG. 3 is a cross sectional view of a conventional multilayered film which can be utilized for producing an inflatable bag body; and
FIG. 4 is a cross sectional view of another conventional printed multilayered film which can be utilized for producing an inflatable bag body.

### DESCRIPTION OF THE PREFERABLE EMBODIMENTS

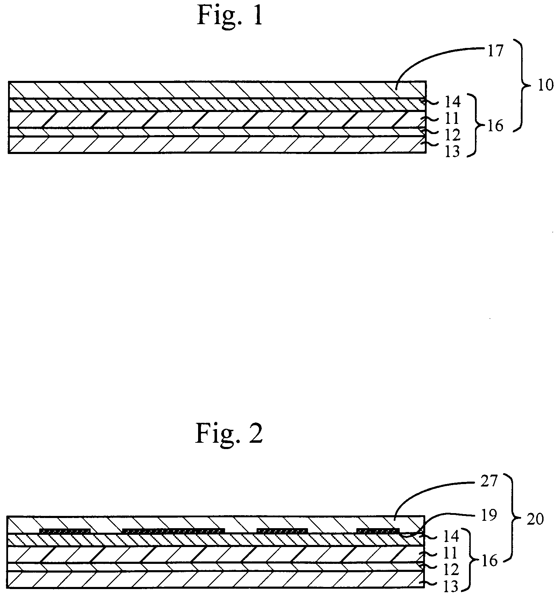

Referring to Fig. 1 of the drawings, a first preferable embodiment of an inflatable bag body embodying the present invention is shown as comprising a multilayered film designated by a reference numeral 10.

The multilayered film 10 comprises a base film layer 11 that is an oriented film made of a material selected from the group consisting of nylon, ethylene vinyl alcohol copolymer, polyethylene terephthalate and polypropylene, and the like. The base film layer 11 has first and second surfaces. The multilayered film 10 further comprises an anchor coating layer 12 formed out of an anchor coat material on the first surface of the base film layer 11 and a first polyolefin resin layer 13 formed out of a polyolefin resin material on the anchor coating layer 12. The polyolefin resin material is preferably linear low-density polyethylene resin. The multilayered film 10 further comprises a deposited metal layer 14 deposited on the second surface of the base film layer 11 and a second polyolefin resin layer 17 formed out of a polyolefin resin material on the deposited metal layer 14. The polyolefin resin material of the second polyolefin resin layer 17 is selected from the group consisting of polyethylene resin and polypropylene resin. The multilayered film 10 may comprise an anchor coating layer, not shown in the drawing, formed out of an anchor coat material between the deposited metal layer 14 and the second polyolefin resin layer 17. The base film layer 11, the anchor coating layer 12, the first polyolefin resin layer 13, the deposited metal layer 14 and the second polyolefin resin layer 17 are integrally formed with one another and as a whole forms the multilayered film 10.

Description will be made hereinlater about a method for producing an inflatable bag body and the operation of the inflatable bag body.

At first, the base film layer 11 is prepared. The first surface of said base film layer 11 is then coated with an anchor coat material to form the anchor coating layer 12. The anchor coating layer 12 is coated with a polyolefin resin material to form the first polyolefin resin layer 13. The first polyolefin resin layer 13 is contacted with the first surface of the base film layer 11 through the anchor coating layer 12 by means of a melting and extruding method or the other appropriate methods. The deposited metal layer 14 is formed by performing a known metal coating process such as vacuum evaporation in which a metal e.g., aluminum is evaporated. The deposited metal layer 14 is coated with a polyolefin resin material to form the second polyolefin resin layer 17. The multilayered film 10 is collectively formed with the base film layer 11, the anchor coating layer 12, the first polyolefin resin layer 13, the deposited metal layer 14 and the second polyolefin resin layer 17. The second polyolefin resin layer 17 is externally exposed to cover the base film layer 11 and the deposited metal layer 14. The first polyolefin resin layer 13 is then heated and pressed along the peripheral portions of the multilayered film 10 to form the inflatable bag body.

The inflatable bag body is filled and inflated with gas which may be identical with or different from air in weight. In the present embodiment, the gas contained in the inflatable bag body is lighter than air in weight and can cause the inflatable bag body to float in the air.

The first preferable embodiment of the inflatable bag body according to the present invention brings the following advantages. As shown in Fig. 1, the multilayered film 10 comprises a base film layer 11, a deposited metal layer 14 and a second polyolefin resin layer 17. When the inflatable bag body is filled and inflated with a gas, the deposited metal layer 14 on the base film layer 11 cannot be elastically expanded while both of the base film layer 11 and the second polyolefin resin layer 17 elastically expands. The deposited metal layer 14 is therefore apt to be damaged to have fine cracks. However, the second polyolefin resin layer 17 is externally exposed to cover the base film layer 11 and the deposited metal layer 14. This results in the fact that the first preferable embodiment has an advantage over prior-art of protecting the damaged deposited metal layer 14 from drops of water and aqueous vapor to prevent the damaged deposited metal layer 14 from being oxidized and from partly peeling from the base film layer 11. The inflatable bag body of the first preferable embodiment can be utilized for a balloon or the like and exposed to the weather without any problem.

The second polyolefin resin layer 17 of the multilayered film 10 has non-electrical conductivity thereby making the inflatable bag body restrain electrical conductivity. When the inflatable bag body bring into contact with live electric wires, the deposited metal layer 14 dose not directly bring into contact with the live electric wires thereby making it possible to prevent an undesirable accident in a power supply system by short-circuiting live electric wires. This results in the fact that the first preferable embodiment has another advantage over prior-art method of making it possible to utilize the inflatable bag body where the live electric wire presents.

The second polyolefin resin layer 17 is made out of a polyolefin resin material which is selected from the group consisting of polyethylene resin and polypropylene resin. This results in the fact that the first embodiment has another advantage over prior-art of making it possible to produce out of the multilayered film 10 which get inexpensive and has appropriate property for the inflatable bag body which has small specific gravity and is elastic.

Fig. 2 shows a second preferable embodiment of a multilayered film according to the present invention. The multilayered film which is denoted by the reference numeral 20 herein shown comprises constitutional elements same as those of the first preferable embodiment described in detail in the above. The constitutional elements of the second preferable embodiment are not be described but respectively bears reference numerals same as those of the constitutional elements of the first preferable embodiment.

As shown in Fig. 2, the multilayered film 20 comprises a base film layer 11, an anchor coating layer 12, a first polyolefin resin layer 13, a deposited metal layer 14, images 19 and a second polyolefin resin layer 27 . The deposited metal layer 14 is printed with the images 19 by a printing ink. The second polyolefin resin layer 27 is formed out of a polyolefin resin material on the printed deposited metal layer 14. Preferably, the second polyolefin rein layer 27 is a layer of transparent resin material which is selected from the group consisting of polyethylene resin and polypropylene resin. The multilayered film 20 may comprise an anchor coating layer, not showing in the drawing, formed out of an anchor coating material between the printed deposited metal layer 14 and the second polyolefin resin layer 27.

The second preferable embodiment of the inflatable bag body according to the present invention brings the following advantages. As shown in Fig. 2, the multilayered film 20 comprises images 19 printed on the deposited metal layer 14 and a second polyolefin resin layer 27 formed on the printed deposited metal layer 14 to cover the printed deposited metal layer 14. When the inflatable bag body is filled and inflated with a gas, the printed deposited metal layer 14 on the base film layer 11 cannot be elastically expanded while both of the base film layer 11 and the second polyolefin resin layer 27 elastically expands. The printed deposited metal layer 14 is therefore apt to be damaged to have fine cracks. However, the second polyolefin resin layer 27 is externally exposed to cover the base film layer 11 and the deposited metal layer 14. The second preferable embodiment has an advantage over prior-art inflatable bag body in that the printed deposited metal layer 14 of the multilayered film 20 are protected by the printed deposited metal layer 14 from drops of water and aqueous vapor to prevent the damaged printed deposited metal layer 14 from being oxidized and from partly peeling from the base film layer 11 of the multilayered film 20.

The inflatable bag body of the second preferable embodiment can be utilized for a balloon or the like and exposed to the weather without any problem.

The many features and advantages of the invention are apparent from the detailed specification and thus it is intended by the appended claims to cover all such features and advantages of the invention which fall within the true spirit and scope thereof. Further, since numerous modifications and changes will readily occur to those skilled in the art, it is not desired to limit the invention to the exact construction and operation illustrated and described, and accordingly, all suitable modifications and equivalents may be resorted to, falling with the scope of the invention.

## Claims

1. An inflatable bag body comprising a multilayered film (10,20), said multilayered film (10,20) including a base film layer (11), a deposited metal layer (14) deposited on one surface of said base film layer(11), and a polyolefin resin layer (17,27) formed out of a polyolefin resin material on said deposited metal layer (14), and said polyolefin resin layer (17,27) being externally exposed to cover said base film layer (11) and said deposited metal layer (14).

2. An inflatable bag body comprising a multilayered film (10,20), said multilayered film (10,20) including a base film layer (11) having first and second surfaces, a coating layer (12) formed out of an anchor coat material on the first surface of said base film layer (11), a first polyolefin resin layer (13) formed out of a polyolefin resin material on said coating layer (12), a deposited metal layer (14) deposited on the second surface of said base film layer (11) and a second polyolefin resin layer (17,27) formed out of a polyolefin resin material on said deposited metal layer (14), said second polyolefin resin layer (17,27) being externally exposed to cover said base film layer (11) and said deposited metal layer (14) and, said multilayered film (10,20) having peripheral portions connected with each other by heating and pressing said first polyolefin resin layer (13) along the peripheral portions.

3. An inflatable bag body as set forth in Claim 1 or Claim 2 which is filled and inflated with a gas.

4. An inflatable bag body as set forth in Claim 3, wherein said gas is lighter than air.

5. An inflatable bag body as set forth in Claim 1, wherein said polyolefin resin material of said polyolefin resin layer (17,27)is selected from the group consisting of polyethylene resin and polypropylene resin.

6. An inflatable bag body as set forth in Claim 2, wherein said polyolefin resin material of said second polyolefin resin layer (17,27)is selected from the group consisting of polyethylene resin and polypropylene resin.

7. An inflatable bag body as set forth in Claim 1 or Claim 2, wherein said deposited metal layer (14) is printed with images (19), said printed images (19) and said deposited metal layer (14) being coated with said polyolefin resin material.

8. An inflatable bag body as set forth in Claim 1 or Claim 2, wherein said base film layer (11) is made of a material selected from the group consisting of nylon, ethylene vinyl alcohol copolymer, polyethylene terephthalate and polypropylene.

9. A method for producing an inflatable bag body, comprising the steps of:
(i) preparing a film to form a base film layer (11);
(ii) depositing a metal on one surface of said base film layer (11) to form a deposited metal layer (14);
(iii) coating said deposited metal layer (14) with a polyolefin resin material to form a polyolefin resin layer (14), said base film layer (11), said deposited metal layer (14) and said polyolefin resin layer (17,27) collectively forming a multilayered film (10,20); and
(iv) forming said multilayered film (10,20) into a bag with said polyolefin resin layer (17,27) externally exposed to cover said base film layer (11) and said deposited metal layer (14).

10. A method for producing an inflatable bag body as set forth in Claim 9, wherein said polyolefin resin material of said polyolefin resin layer (17,27) is selected from the group consisting of polyethylene resin and polypropylene resin.

11. A method for producing an inflatable bag body, comprising the steps of:
(i) preparing a film to form a base film layer (11) having first and second surfaces;
(ii) coating the first surface of said base film layer (11) with an anchor coat material to form a coating layer (12);
(iii) coating said coating layer (12) with a polyolefin resin material to form a first polyolefin resin layer (13);
(iv) depositing a metal on the second surface of said base film layer (11) to form a deposited metal layer (14);
(v) coating said deposited metal layer (14) with a polyolefin resin material to form a second polyolefin resin layer (17,27), said base film layer (11), said coating layer (12), said first polyolefin resin layer (13), said deposited metal layer (14) and said second polyolefin resin layer (17,27) collectively forming a multilayered film (10,20);
(vi) holding one pair of parts of said first polyolefin resin layer (13) in face-to-face relationship with each other with said second polyolefin resin layer (17,27) being externally exposed to cover said base film layer (11) and said deposited metal layer (14); and
(vii) heating and pressing the parts of said first polyolefin resin layer (13).

12. A method for producing an inflatable bag body as set forth in Claim 11, wherein said polyolefin resin material of said second polyolefin resin layer (17,27) is selected from the group consisting of polyethylene resin and polypropylene resin.

13. A method for producing an inflatable bag body as set forth in Claim 9 or Claim 11, which further comprises the step of printing images (19) on said deposited metal layer (14) before coating said printed images (19) and said deposited metal layer (14) with said polyolefin resin material.

14. A method for producing an inflatable bag body as set forth in Claim 9 or Claim 11 wherein said base film layer (11) is made of a material selected from the group consisting of nylon, ethylene vinyl alcohol copolymer, polyethylene terephthalate and polypropylene.
